# EUROPEAN PATENT APPLICATION

(11) **EP 0 970 852 A1**
(43) Date of publication of application: **12.01.2000**
(21) Application number: 98202307.9
(22) Date of filing: 08.07.1998
(51) Int. Cl.: B60R 7/08

(54) **Holder for eyeglasses**

(71) Applicant: Seach, Eugene J., Warren, OH 44484 (US)
(72) Inventor: Seach, Eugene J., Warren, OH 44484 (US)
(74) Representative: Lundquist, Arne

(57) **Abstract**

An eyeglass holder for automobiles and the like to secure and hold eyeglasses in folded vertically aligned position engagement. The holder has a spring-urged engagement area accessible by depressing a portion of the holder. The engagement area receives and holds the eyeglasses between a fixed element and the movable access portion of the device.

## Description

### Background of the Invention

### Technical Field:

This invention relates to eyeglass holders and the like used to temporarily hold and secure eyeglasses that will allow for quick and easy positioning and access to the glasses in vehicle environments where drivers attention should be directed to the road at all times.

### Description of Prior Art:

Prior art devices of this type have relied on a variety of different design configurations to hold eyeglasses for easy access. Typically, prior art eyeglass holders are inconvenient and while holding the eyeglasses must be placed somewhere within the vehicle making retrieval of the holder difficult given the limited storage space available to the driver while driving. Selected attempts to solve this problem in eyeglass storage in general can be seen in U.S. Patents 5,340,074, 5,000,410, 4,771,512, 4,452,354 and 4,239,167.

In U.S. Patent 5,340,047 an eyeglass display case is disclosed that is directed to holding and displaying glasses for retail sales. It illustrates an apertured panel through which the ear piece of the eyeglass is inserted.

Patent 5,000,410 shows an eyeglass holder for automobiles that has an animal configuration with an extended fold over flap that engages the ear pieces of the eyeglass and graphically represents an animals tail.

Patent 4,771,515 claims an eyeglass pocket insert holder that secures the eyeglasses within a shirt pocket.

An eyeglass holder is illustrated in U.S. Patent 4,452,354 that provides a tubular sleeve of flexible plastic material through which the eyeglass ear piece is inserted.

In Patent 4,239,167 a wall mounted eyeglass holder is shown wherein a bracket is formed out of a body panel to receive and suspend the glasses therein.

Finally, in U.S. Patent 3,148,812 a holder for spectacles is illustrated that forms a folded loop about the eyeglass positioned therethrough.

### Summary of the Invention

A holder for eyeglasses that is secured within the dash or other suitable areas of an automobile that can be easily accessible by the driver or passenger during operation. The holder of the invention secures the eyeglasses in folded vertically aligned position by resiliently engaging a portion of the ear piece by a spring-urged element.

### Description of the Drawings

Figure 9 is a sectional view of a third alternate form of the invention;
Figure 10 is a sectional view of a modified form of the invention shown in figure 9; and
Figure 11 is a sectional view of a hinged configuration of the alternate form as seen in figure 9.

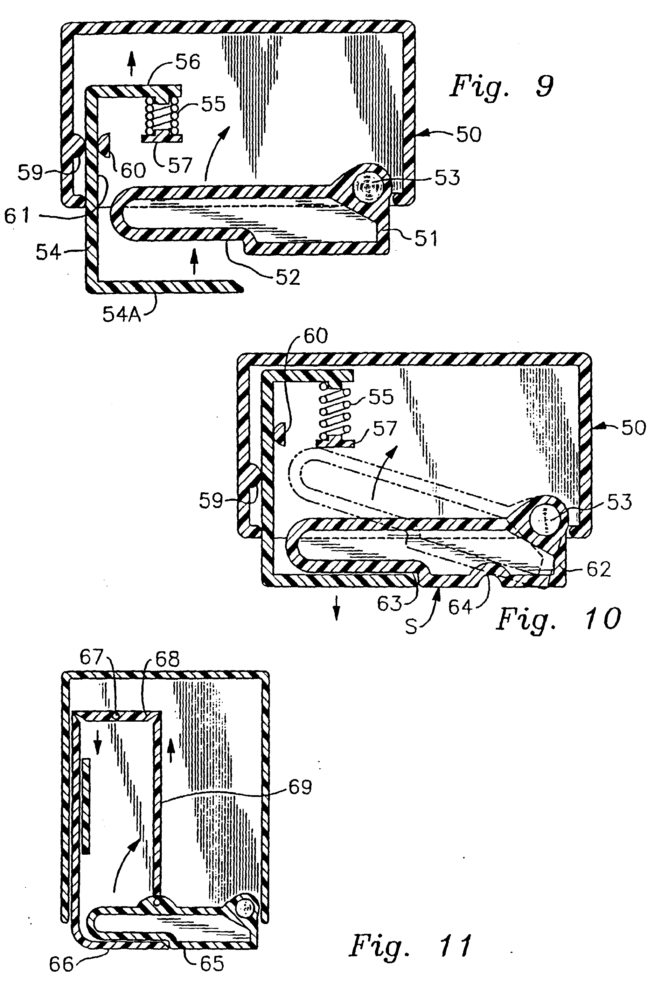

### Description of the Preferred Embodiment

Referring to figure 9 of the drawings, a modified form of the invention can be seen having a three-sided rectangular open enclosure 50 with a pivoted engagement and access portion 51 having a recessed area 52 inwardly from one end thereof. The engagement portion 51 has an internal coil spring assembly 53 that resiliently urges the engagement portion 51 from the enclosure. A return and eye glass engagement portion 54 extends from the enclosure with a portion 54A overlying the recessed area 52 having an independent spring means 55 engageable on an arm 56 and a spring stop 57, best seen in figure 9 of the drawings. A pair of guides 59 and 60 are interengageable on a portion of the arm 54 in use, the modified form of the invention illustrated in figures 9 and 10 shows the invention at rest in figure 10, wherein an eyeglass (not shown) can be inserted and held between access portion 51, recess area 52 and engagement portion 54 by a combination of spring-urged movement of both the portion 54A of the engagement portion 54 and the recess area 52 of the engagement portion 51.

For insertion of eyeglasses, deflection and movement of the engagement portion 51 is required to gain access while to remove eyeglasses, movement of the return and eyeglass engagement portion 54 is required as the eyeglasses are pulled out.

Referring now to figure 10 of the drawings, a modified from of the invention set forth in figure 9 is shown wherein a pivoted engagement and access portion 62 can be seen having a reduced area of recess at 63 and a visualization proportional groove 64 therein so as to provide an equal dimension surface S visually to the user (not shown).

Referring now to figure 11 of the drawings, a spring urged interconnected engagement and access portion 65 and return eye glass engagement portion 66 can be seen, wherein a secondary pivot point 67 and connection arm 68 are used to transfer the relative motion of the pivoted access portion 65 to the engagement portion 66 via an interconnecting link 69 extending from a pivot fitting 10 on the access portion 65 to the connection arm 68 as hereinbefore described.

It will be evident that as the engagement and access portion 65 is retracted within the enclosure that correspondingly the interconnected eye glass engagement portion 66 will be extended outwardly as indicated by directional arrows.

It will be evident from the above description both the preferred embodiment and alternate form of the invention's illustrated provide a frictional gripping co-efficient on the temple portion 26 of the affected eyeglasses, holding same in a secured easily available fashion as hereinbefore described.

It will thus be apparent to those skilled in the art that various changes and modifications may be made therein without departing from the spirit of the invention, therefore I claim:

## Claims

1. An eyeglass holder for supporting a pair of eyeglasses in a removably secured relation therein comprises; an enclosure having an opening therein, access element movable positioned within said enclosure, an eyeglass engagement body member extending from said opening in the enclosure in spaced overlapping relation to a portion of said access element, a coiled spring within said access element for resiliently positioning said access element within said enclosure, spring means in communication with said eyeglass engagement body member, guide means within said enclosure engageable on said eyeglass engagement body member, said engagement body member and said movable access element together surrounding an ear piece of said pair of eyeglasses.

2. The eyeglass holder of claim 11 wherein said access element is positioned partially within said enclosure and has a reduced recessed area in said access element and a groove therein proportional to said recessed area, said recessed area in spaced relation to said eyeglass engagement body member.

3. An eyeglass holder for supporting a pair of eyeglasses in a removably secured relation therein comprises; an enclosure having an opening therein, access element movably positioned within said enclosure, an eyeglass engagement body member extending from said opening in the enclosure in spaced overlapping relation to a portion of said access element, a coil spring within said access element for resiliently positioning said access element within said enclosure, said eyeglass engagement body member and said movable access element interconnected by a pivot arm and interengagement link, guide means in said enclosure engageable on a portion of said movable acccess element.

4. The eyeglass holder set forth in claim 13 wherein said interengagement link is pivotally secured to said access element.
